(19) Europäisches Patentamt

European Patent Office

Office européen des brevets

(11) **EP 0 811 784 B1**

(12) **EUROPÄISCHE PATENTSCHRIFT**

(45) Veröffentlichungstag und Bekanntmachung des Hinweises auf die Patenterteilung:
**18.09.2002 Patentblatt 2002/38**

(51) Int Cl.⁷: **F16F 7/10**, F16F 15/023

(21) Anmeldenummer: **97107426.5**

(22) Anmeldetag: **06.05.1997**

(54) **Aktiver Schwingungsdämpfer**

Active vibration damper

Amortisseur actif de vibrations

(84) Benannte Vertragsstaaten:
**DE FR GB IT**

(30) Priorität: **30.05.1996 DE 19621700**

(43) Veröffentlichungstag der Anmeldung:
**10.12.1997 Patentblatt 1997/50**

(73) Patentinhaber: **Eurocopter Deutschland GmbH**
**86609 Donauwörth (DE)**

(72) Erfinder: **Heel, Patrick**
**87751 Heimertingen (DE)**

(74) Vertreter: **Baum, Wolfgang, Dipl.-Ing. et al**
**EADS Deutschland GmbH**
**Patentabteilung LG-PM**
**Willy-Messerschmitt-Strasse**
**85521 Ottobrunn (DE)**

(56) Entgegenhaltungen:
**EP-A- 0 519 786**     **WO-A-92/02382**
**DE-A- 3 902 603**     **GB-A- 2 205 921**

## Beschreibung

Die Erfindung betrifft einen aktiven Schwingungsminderer zum Reduzieren der Schwingungsübertragung von einem dynamisch belasteten Bauteil an eine dieses abstützende Tragstruktur, bestehend aus einem durch die dynamischen Belastungen erregbaren, frei schwingend zwischen Bauteil und Tragstruktur gelagerten, linear bewegbaren Federpendel und einem schwingungskonform zum Federpendel aktivierbaren und dieses mit einer von der Frequenz und Höhe der dynamischen Belastungen abhängigen Kraftamplitude in Schwingungsrichtung beaufschlagbaren Aktuator.

Derartige Schwingungsminderer können überall dort eingesetzt werden, wo eine periodische Erregung isoliert oder getilgt werden soll, insbesondere auch bei Hubschraubern, um die vom Rotor-Getriebe-System einwirkenden dynamischen Belastungen von der Hubschrauberzelle fernzuhalten.

Aus der US 3 322 379, der CA 781 817 oder der DE 29 07 926 sind zu diesem Zweck passive Schwingungsisolatoren mit einem vom schwingenden Bauteil mechanisch oder hydraulisch erregten Federpendel bekannt, welches so abgestimmt ist, dass lokal eine Aufhebung der dynamischen Kraftanteile am zellenseitigen Befestigungspunkt erfolgt, so dass im Antiresonanzfall praktisch keine Schwingungen mehr vom Rotor-Getriebesystem auf die Hubschrauberzelle übertragen werden. Derartige Schwingungsisolatoren haben jedoch eine systembedingt invariante Antiresonanzfrequenz und eine äußerst schmalbandige Isolationswirkung und besitzen ein sehr großes Bauvolumen und Eigengewicht, was gerade im Hinblick auf die strikten Gewichtsbeschränkungen und beengten Platzverhältnisse insbesondere im Hubschrauberbau ein gravierender Nachteil ist.

Die WO 92/02 382, die den Stand der Technik gemäß dem Oberbegriff des Anspruchs 1 zeigt, betrifft ein Aufhängungssystem zwischen Fahrzeugkarosserie und dem Rad eines Fahrzeuges. Das Aufhängungssystem wird in erster Linie in Motorfahrzeugen als Federung zwischen Korosserie und Rad benutzt, die typischerweise zwei Resonanzbereiche zeigen, welche in dem einen Fall durch die Masse der Karosserie und die Hauptfeder des Aufhängungssystems und in dem zweiten Fall durch die Masse der Räder verursacht sind.

Das Aufhängungssystem arbeitet als aktiver Schwingungsminderer zum Reduzieren der Schwingungsübertragung von einem dynamisch belasteten Rad an eine dieses abstützende Tragstruktur. Die Lösung verwendet mechanische Bauteile, die immer noch relativ großen Raumbedarf haben und ein relativ großes Eigengewicht besitzen. Das ist im Hubschrauberbau nachteilig.

Aufgabe der Erfindung ist es, einen aktiven Schwingungsminderer der eingangs genannten Art zu schaffen, der eine konstruktiv einfache, gewichtssparende Bauweise besitzt und eine hochwirksame Schwingungsreduktion mit einem geringen Fremdenergieverbrauch garantiert.

Diese Aufgabe wird erfindungsgemäß durch den im Patentanspruch 1 angegebenen Schwingungsminderer gelöst.

Erfindungsgemäß werden durch die Anordnung eines von den dynamischen Bauteilbelastungen erregten Federpendels in Verbindung mit einem das Federpendel zusätzlich schwingungskonform fremdkrafterregenden Aktuator die zur Schwingungsminderung erforderliche Pendelmasse und dadurch das Bauvolumen und -gewicht des Schwingungsminderers deutlich verringert und zugleich die benötigte Aktuatorkraft und somit der Fremdenergieverbrauch auf einen Bruchteil der bauteilseitig einwirkenden Erregerkräfte reduziert. Es besteht weiterhin der Vorteil, dass der erfindungsgemäße Schwingungsminderer aufgrund der kombinierten Eigenund Fremderregung des Federpendels nicht nur eine singuläre Antiresonanzfrequenz besitzt, sondern in einem relativ breitbandigen Frequenzbereich bereits eine ausgeprägte Antiresonanzwirkung aufweist. Der Schwingungsminderer lässt sich problemlos allein durch Änderung der Kraftamplitude des Aktuators, auf eine in weiten Grenzen variable Antiresonanzfrequenz einstellen.

In weiterer vorteilhafter Ausgestaltung der Erfindung wird der Wirkzusammenhang zwischen der Kraftamplitude des Aktuators und der Antiresonanzfrequenz auf die in Anspruch 2 angegebene Weise für eine kontinuierliche, selbsttätige Anpassung des Schwingungsminderers an frequenzvariable, dynamische Bauteilbelastungen ausgenutzt. Hierdurch wird vor allem bei modernen Hubschrauber-Rotorsystemen, die in einem erweiterten Drehzahlbereich betrieben werden, ein hoher Vibrationsunterdrückungsgrad im gesamten Operationsbereich des Hubschraubers sichergestellt. Als Sensor für die Kraftamplitudensteuerung des Aktuators genügt dabei, wie nach Anspruch 3 bevorzugt, ein einfaches Piezoelement.

Im Hinblick auf eine konstruktiv einfache, platzsparende Gestaltung wird die Reaktionskraft des Aktuators nach Anspruch 4 vorzugsweise an der Tragstruktur abgestützt.

Unter dem Gesichtspunkt mehrerer Antiresonanzfrequenzen wird die Reaktionskraft des Aktuators nach Anspruch 5 in besonders bevorzugter Weise federnd an der Tragstruktur oder dem Bauteil abgesetzt, wodurch eine verfeinerte Einstellung des Frequenzabstandes der Antiresonanzstellen möglich ist.

Die Magnetspulenanordnung kann gemäß Anspruch 6 im Hinblick auf ein verbessertes Leistungsverhalten vorzugsweise doppelt wirkend ausgebildet sein.

Die Erfindung wird nunmehr anhand zweier Ausführungsbeispiele in Verbindung mit den Zeichnungen näher erläutert. Es zeigen in stark schematisierter Darstellung:

**Fig. 1** einen Schnitt eines aktiven Schwingungsminderers mit im wesentlichen starrer Verbindung zwischen bauteilseitigem und tragstrukturseitigem Befestigungspunkt sowie variabler Aktuatorkraftsteuerung;

**Fig. 2** Frequenzgänge der tragstrukturseitigen Auslenkungsamplituden des Schwingungsminderers gemäß Fig. 1, errechnet anhand von Beispielsdaten für unterschiedlich hohe Aktuatorkräfte; und

**Fig. 3** eine weitere Ausführungsform des aktiven Schwingungsminderers mit federnder Aktuatorabstützung an der Tragstruktur.

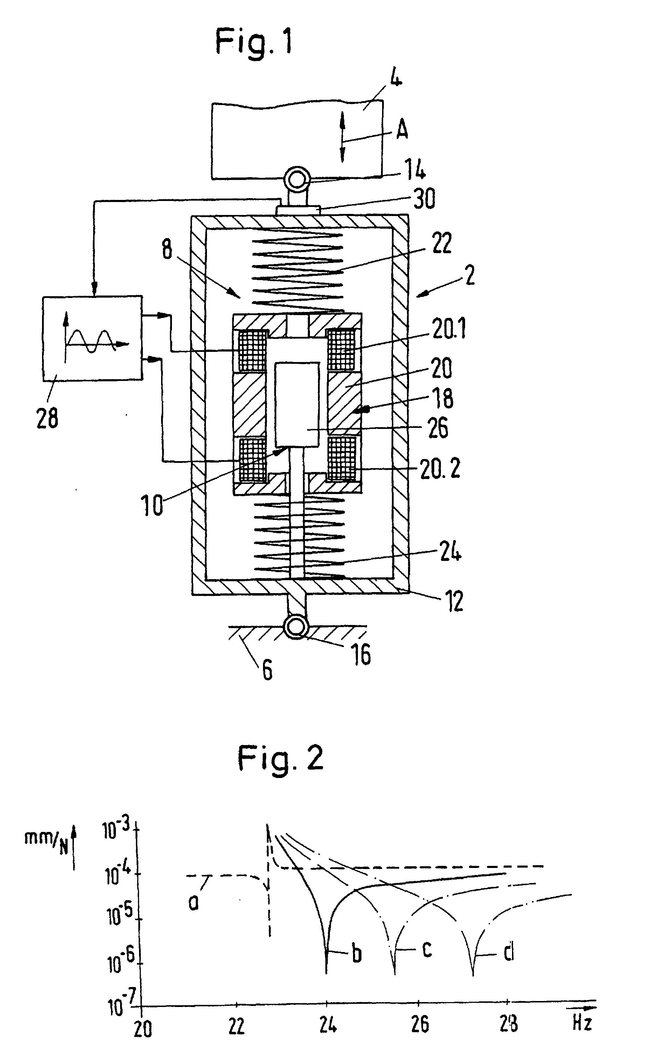

Der in Fig. 1 gezeigte Schwingungsminderer 2 ist zwischen einem in Pfeilrichtung A periodisch belasteten Bauteil 4, etwa dem Hauptgetriebe eines Hubschrauber-Rotorsystems, und einer Tragstruktur 6, also z.B. der Hubschrauberzelle, angeordnet und enthält als Hauptbestandteile eine in Richtung A der dynamischen Belastungen freischwingendes Federpendel 8 in Kombination mit einem das Federpendel 8 fremdkrafterregenden, elektrisch steuerbaren Aktuator 10, die in einem gemeinsamen Gehäuse 12 untergebracht sind, welches den bauteilseitigen Befestigungspunkt 14 im wesentlichen starr mit dem zellenseitigen Befestigungspunkt 16 des Schwingungsminderers 2 verbindet.

Die Federpendel-Aktuator-Kombination 8, 10 besteht bei dem gezeigten Ausführungsbeispiel aus einer doppelt wirkenden Magnetspulenanordnung 18, deren Magnetspule 20 die linear über Federelemente 22, 24 frei schwingungsfähig am Gehäuse 12 gelagerte Pendelmasse des Federpendels 8 bildet, während der Anker 26 der Magnetspulenordnung 18 fest mit dem Gehäuse 12 verbunden ist.

Die periodische Erregerkraft am bauteilseitigen Befestigungspunkt 14 führt zu harmonischen Eigenschwingungen des aus der Magnetspule 20 und den Federn 22, 24 bestehenden Federpendels 8. Zusätzlich werden durch phasenkonforme, elektrische Fremdkrafterregung der Magnetspule 20 genau gesteuerte dynamische Wechselkräfte erzeugt, die die Spulenträgheitskraft verstärken und so die bauteilseitigen Erregerkräfte auf dem Wege einer Tilgung oder Isolation vom zellenseitigen Befestigungspunkt 16 fernhalten. Das Übertragungsverhalten des Systems ist abhängig von den Auslegungsparametern, insbesondere der Federcharakteristik der Federelemente 22, 24, der Masse der Magnetspule 20, der Größe der bauteilseitig einwirkenden Erregerkräfte, der Masse der Tragstruktur 6 und des schwingenden Bauteils 4 sowie der Amplitude der magnetischen Wechselkraft. Durch entsprechende Wahl der Auslegungsparameter wird mit einer, bezogen auf die bauteilseitige Erregerkraft, kleinen Pendel-(Spulen-)Masse ein hoher Vibrationsunterdrückungsgrad über einen breiten Frequenzbereich erhalten, wie dies nachfolgend im einzelnen anhand der Fig. 2 erläutert wird, die die Übertragungsfunktion der Auslenkungsamplitude am zellenseitigen Befestigungspunkt 16 für verschieden große Magnetkraftamplituden im Frequenzdiagramm auf der Grundlage eines hubschraubertypischen Datensatzes mit einer Spulenmasse $m_S = 3{,}5$ kg und einer bauteilseitigen Erregerkraft $F_R = 500$ N zeigt.

Die Kurve a entspricht dem Eigenschwingungsverhalten des Schwingungsminderers 2 ohne Magnetkrafterregung des Federpendels 8. Dabei ergibt sich bei einer singulären Erregerfrequenz von annähernd 23 Hz zwar rein theoretisch eine Antiresonanz, die jedoch wegen der gewählten Massenverhältnisse technisch nicht nutzbar ist. Der Einfluß der Magnetkrafterregung auf das Systemverhalten ist, gestaffelt nach zunehmend größerer Magnetkraftamplitude, aus den Kurven b, c und d ersichtlich. Man erkennt, daß der Schwingungsminderer 2 nunmehr ein ausgeprägtes Antiresonanzverhalten aufweist, wobei die Lage der Antiresonanzstelle von der Kraftamplitude des Magnetkraftaktuators 10 abhängt. Ferner ist ersichtlich, daß die Antiresonanzwirkung nicht auf eine singuläre Erregerfrequenz beschränkt ist, sondern sich über einen breiten Frequenzbereich erstreckt, in welchem die Kurven b, c und d deutlich unterhalb der magnetkraftfreien Vergleichskurve a verlaufen und somit eine signifikante Schwingungsreduktion vorhanden ist.

Zwischen der Magnetkraftamplitude $F_M$, und der Antiresonanzfrequenz $\omega_A$, besteht folgende Beziehung

$$F_M / F_R = 1 - \frac{k_{22} + k_{24}}{\omega_A^2 \cdot m_s \cdot 4 \cdot \pi^2}$$

Hierin bedeuten

$F_M$[N] = Magnetkraft
$F_R$ [N] = bauteilseitige Erregerkraft
$k_{22}$, $k_{24}$ [N/mm] = Federkonstanten der Federn 22, 24
$\omega_A$ [Hz] = Antiresonanzfrequenz
$m_s$ [kg] = Masse der Magnetspule 20

Auf der Basis dieser Abstimmgleichung läßt sich die Antiresonanzstelle des Schwingungsminderers 2 durch Änderung des Kraftverhältnisses $F_M/F_R$ auf eine gewünsche Frequenz verschieben. So wandert die Antiresonanzstelle bei dem zugrundeliegenden Berechnungsbeispiel von ca. 24 Hz (Kurve b) auf ca. 27 Hz (Kurve d), wenn das Kraftverhältnis $F_M/F_R$ von 0,1 auf 0,3 erhöht wird.

Bei Rotorsystemen wird die Antiresonanzfrequenz im allgemeinen auf die erste blattzahlharmonische Rotorerregung, also bei einem Vierblattrotor auf 4 Ω eingestellt. Für moderne Hubschrauber, die mit einer variablen Rotordrehzahl arbeiten, ist es ferner auf der Basis der obigen Abstimmgleichung möglich, die Antiresonanzstelle des Schwingungsminderers 2 automatisch an die Drehzahlvariationen des Rotors anzupassen.

Zu diesem Zweck ist dem Schwingungsminderer 2 gemäß Fig. 1 eine Steuerstufe 28 einschließlich eines Sensors 30, etwa in Form eines Piezoelementes, zugeordnet, welches zusätzlich zur Amplitude auch die Frequenz der rotorseitigen Erregerkraft $F_R$ mißt. In der Steuerstufe 28 wird der Erregerstrom für die beiden Spulenhälften 20.1 und 20.2 mit Hilfe der Abstimmgleichung oder anhand eines Datenkennfeldes so variiert, daß sich die Antiresonanzstelle des Schwingungsminderers 2 an die Rotorerregerfrequenz anpaßt.

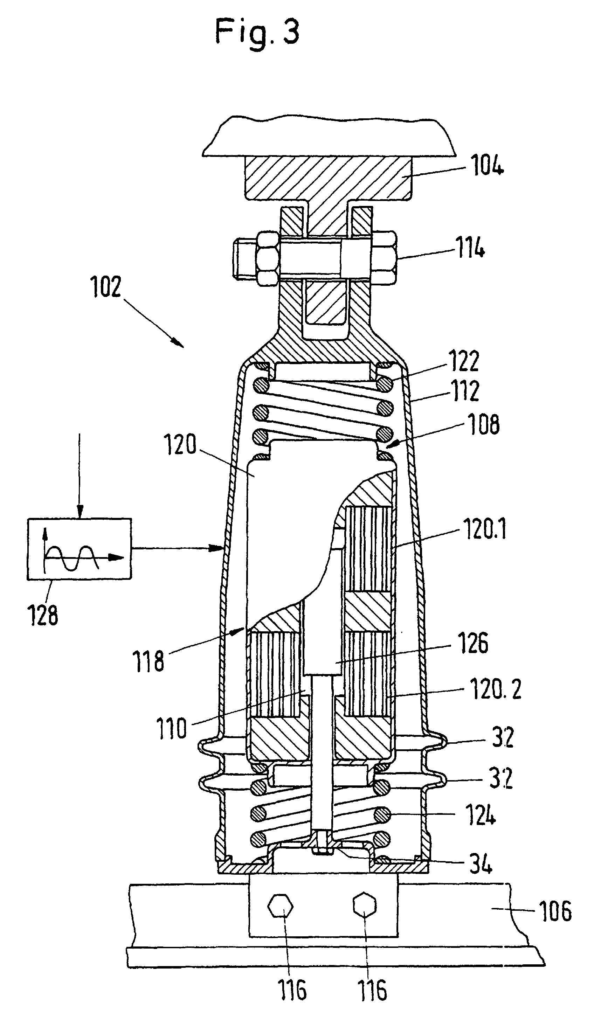

Der Schwingungsminderer gemäß Fig. 3, bei dem die dem ersten Ausführungsbeispiel entsprechenden Bauelemente durch ein um 100 erhöhtes Bezugszeichen gekennzeichnet sind, unterscheidet sich von diesem in erster Linie dadurch, daß das Gehäuse 112 in Richtung der dynamischen Bauteilbelastungen federelastisch (bei 32) ausgebildet und der Anker 126 des Magnetkraftaktuators 110 ebenfalls elastisch, nämlich über ein Tellerfederelement 34, am Gehäuse 112 abgestützt ist. Hierdurch wird die Anzahl der Freiheitsgrade des Systems erhöht, so daß sich die Übertragungsfunktion der Auslenkungsamplituden noch weiter variieren läßt und es durch entsprechende Wahl der Auslegungsparameter sogar möglich ist, ohne Änderung des Magnet-/Erregeerkraftverhältnisses, $F_M/F_R$, mehrere diskrete Antiresonanzstellen in einem vorgewählten, gegenseitigen Frequenzabstand zu erzielen, also etwa zusätzlich zu der Antiresonanz bei der ersten, blattzahlharmonischen Rotorerregung (4 Ω) eine weitere Antiresonanzstelle bei der zweiten Blattzahlharmonischen (8 Ω). Durch eine derartige mehrfrequente Auslegung des Schwingungsminderers 102 wird eine hochgradige Reduzierung von hubschrauberspezifischen Vibrationen gewährleistet. Auch bei diesem Ausführungsbeispiel wird die Magnetkrafterregung wiederum durch eine Steuereinheit 128 entweder im Sinne eines konstanten Kraftverhältnisses $F_M/F_R$ oder aber für variable Rotordrehzahlen und damit Erregerfrcquenzen im Sinne einer erregerfrequenzabhängigen Magnetkraftamplitude auf der Basis einer unter Berücksichtigung der federnden Gehäuseabstützung modifizierten Abstimmgleichung reguliert. Im übrigen ist die Bauund Funktionsweise des Schwingungsminderers 102 die gleiche wie beim ersten Ausführungsbeispiel.

**Patentansprüche**

**1.** Aktiver Schwingungsminderer zum Reduzieren der Schwingungsübertragung von einem dynamisch belasteten Bauteil (4; 104) an eine dieses abstützende Tragstruktur (6; 106), bestehend aus

- einem durch die dynamischen Belastungen erregbaren, frei schwingend zwischen Bauteil (4; 104) und Tragstruktur (6; 106) gelagerten, linear bewegbaren Federpendel (8; 108) und

- einem schwingungskonform zum Federpendel aktivierbaren und dieses mit einer von der Frequenz und Höhe der dynamischen Belastungen ($F_R$) abhängigen Kraftamplitude ($F_M$) in Schwingungsrichtung beaufschlagbaren Aktuator (10; 110),

**dadurch gekennzeichnet, dass** die Magnetspule (20;120) einer elektrisch gesteuerten Magnetspulenanordnung (18; 118) die Pendelmasse des Federpendels (8;108) ausbildet und die Magnetspule (20;120) derart frei schwingend zwischen Bauteil (4;104) und Tragstruktur (6,106) angeordnet ist, dass sie parallel wirkend gegenüber der Abstützung (12;112) zwischen Bauteil (4;104) und Tragstruktur (6;106) an der Tragstruktur (6;106) oder am Bauteil (4;104) federnd abgestützt ist, wobei der Anker (26;126) am Bauteil (4;104) oder an der Tragstruktur (6;106) abgestützt ist.

**2.** Schwingungsminderer nach Anspruch 1, **dadurch gekennzeichnet, dass** ein die dynamischen Bauteilbelastungen ($F_R$) aufnehmender Sensor (30) und eine die Kraftamplitude ($F_M$) des Aktuators (10) in Abhängigkeit von der dynamischen Belastungsamplitude und - frequenz des Bauteils (4) veränderlich einstellende Steuerstufe (28) angeordnet sind.

**3.** Schwingungsminderer nach Anspruch 2, **dadurch gekennzeichnet, dass** als Sensor (30) ein auf die dynamischen Bauteilbelastungen ($F_R$) ansprechendes Piezoelement vorgesehen ist.

**4.** Schwingungsminderer nach einem der vorhergehenden Ansprüche, **dadurch gekennzeichnet, dass** die Reaktionskraft des Aktuators (10;110) an der Tragstruktur (6;106) abgestützt ist.

**5.** Schwingungsminderer nach einem der vorhergehenden Ansprüche, **dadurch gekennzeichnet, dass** der Aktuator (110) federnd (bei 34) an der Tragstruktur (106) oder dem Bauteil (104) abgestützt ist.

**6.** Schwingungsminderer nach Anspruch 1, **dadurch gekennzeichnet, dass** eine doppelt wirkende Magnetspulenanordnung (18;118) angeordnet ist.

**Claims**

**1.** Active vibration damper for reducing the transmission of vibrations from a dynamically loaded component (4; 104) to a supporting structure (6; 106) bearing it, comprising

- a linearly movable spring pendulum (8; 108) that can be excited by the dynamic loads and is mounted in a freely vibrating manner between component (4; 104) and supporting structure (6; 106), and

- an actuator (10; 110) that can be activated in a vibrationally conformal manner with respect to the spring pendulum and that can be acted on in the vibration direction by the latter with a force amplitude ($F_M$) dependent on the frequency and level of the dynamic loads ($F_R$),

**characterized in that** the magnetic coil (20; 120) of an electrically controlled magnetic-coil arrangement (18; 118) forms the pendulum mass of the spring pendulum (8; 108) and the magnetic coil (20; 120) is disposed in a freely vibrating manner between component (4; 104) and supporting structure (6; 106) in such a way that it is borne resiliently in a parallel-acting manner with respect to the supporting structure (12; 112) between component (4; 104) and supporting structure (6; 106) on the supporting structure (6; 106) or on the component (4; 104), the armature (26; 126) being borne on the component (4; 104) or on the supporting structure (6; 106).

**2.** Vibration damper according to Claim 1, **characterized in that** a sensor (30) that picks up the dynamic component loads ($F_R$) and a control stage (28) that variably adjusts the force amplitude ($F_M$) of the actuator (10) as a function of the dynamic load amplitude and load frequency of the component (4) are provided.

**3.** Vibration damper according to Claim 2, **characterized in that** a piezoelectric element that responds to the dynamic component loads ($F_R$) is provided as sensor (30).

**4.** Vibration damper according to one of the preceding claims, **characterized in that** the reaction force of the actuator (10; 110) is borne on the supporting structure (6; 106).

**5.** Vibration damper according to one of the preceding claims, **characterized in that** the actuator (110) is resiliently borne (at 34) on the supporting structure (106) or the component (104).

**6.** Vibration damper according to Claim 1, **characterized in that** a double-action magnetic coil arrangement (18; 118) is provided.

**Revendications**

**1.** Réducteur actif de vibrations pour réduire la transmission des vibrations d'une pièce (4, 104) soumise à des sollicitations dynamiques vers une structure de support (6, 106) soutenant cette pièce, comprenant :

- un pendule à ressort (8, 108) à mouvement linéaire, monté entre la pièce (4, 104) oscillant librement, excité par les sollicitations dynamiques et la structure de support (6, 106) et
- un actionneur (10, 110) susceptible d'être activé de manière conforme aux vibrations du pendule à ressort et sollicitant celui-ci dans la direction des vibrations avec une force d'amplitude ($F_M$) dépendant de la fréquence et de l'amplitude des sollicitations dynamiques ($F_R$),

**caractérisé en ce que**
la bobine magnétique (20, 120) d'un montage à bobine magnétique (18, 118) à commande électrique constitue la masse du pendule à ressort (8, 108) et la bobine magnétique (20, 120) est montée libre en vibrations entre la pièce (4, 104) et la structure de support (6, 106) de façon à être appuyée entre la pièce (4, 104) et la structure de support (6, 106) de façon élastique sur la structure de support (6, 106) ou la pièce (4, 104), pour agir en parallèle par rapport à l'appui (12, 112),
l'induit (26, 126) étant appuyé contre la pièce (4, 104) ou la structure de support (6, 106).

2.  Réducteur de vibrations selon la revendication 1,
    **caractérisé par**
    un capteur (30) recevant les sollicitations dynamiques ($F_R$) appliquées à la pièce et un étage de commande (28) réglant de manière variable l'amplitude de la force ($F_M$) développée par l'actionneur (10) en fonction de l'amplitude de la sollicitation dynamique et de la fréquence de la pièce (4).

3.  Réducteur de vibrations selon la revendication 2,
    **caractérisé en ce que**
    le capteur (30) est un élément piézo-électrique répondant aux sollicitations dynamiques ($F_R$) appliquées à la pièce.

4.  Réducteur de vibrations selon l'une quelconque des revendications précédentes,
    **caractérisé en ce que**
    la force de réaction de l'actionneur (10, 110) est appuyée contre la structure de support (6, 106).

5.  Réducteur de vibrations selon l'une quelconque des revendications précédentes,
    **caractérisé en ce que**
    l'actionneur (110) est appuyé élastiquement (en 34) contre la structure de support (106) ou la pièce (104).

6.  Réducteur de vibrations selon la revendication 1,
    **caractérisé par**
    un montage à bobine magnétique (18, 118) à double effet.

## Fig. 1

## Fig. 2

# Fig. 3